# EUROPEAN PATENT APPLICATION

(11) **EP 2 897 363 A1**
(43) Date of publication of application: **22.07.2015**
(21) Application number: 13845136.4
(22) Date of filing: 07.04.2013
(51) Int. Cl.: H04N 19/00

(54) **METHOD AND DEVICE FOR ACQUIRING DISPARITY VECTOR PREDICTOR OF PREDICTION BLOCK**

(30) Priority: 09.10.2012 CN 201210379683
(71) Applicant: Huawei Technologies Co., Ltd., Longgang District Shenzhen, Guangdong 518129 (CN)
(72) Inventor: LIN, Yongbing, Shenzhen Guangdong 518129 (CN)
(74) Representative: Körber, Martin Hans
(86) International application number: PCT/CN2013/073820
(87) International publication number: WO 2014/056315

(57) **Abstract**

The present invention provides a method and an apparatus for acquiring a disparity vector predictor of a prediction block, relates to the field of video coding, and solves a problem that DV predictors of at least two PUs of a same coding unit CU can be acquired only in a serial manner, thereby improving a parallel processing capability. The method may specifically include: acquiring a neighboring block of a current prediction block in a space domain; determining, according to a partition manner of a current coding unit, a position of the current prediction block in the current coding unit, and a position of the neighboring block, whether the neighboring block is located in the current coding unit; and acquiring, according to a preset order, a disparity vector predictor from a neighboring block not located in the current coding unit, and proceeding with the acquisition until a disparity vector predictor is acquired. The present invention may be applied to acquisition of a disparity vector predictor.

## Description

This application claims priority to Chinese Patent Application No. 201210379683.7, filed with the Chinese Patent Office on October 9, 2012, and entitled "METHOD AND APPARATUS FOR ACQUIRING DISPARITY VECTOR PREDICTOR OF PREDICTION BLOCK", which is incorporated herein by reference in its entirety.

### TECHNICAL FIELD

The present invention relates to the field of video coding, and in particular, to a method and an apparatus for acquiring a disparity vector predictor of a prediction block.

### BACKGROUND

The JCT3V (Joint Collaborative Team on 3D Video Coding, Joint Collaborative Team on 3DV Video Coding) supports multi-views (multiple views, that is, two or more views) coding. Multiple views refer to video sequences obtained by performing collection on a same scene from different angles of view, where a strong correlation exists between each view. By using the correlation between each view (view), inter-view redundancy is removed by using an inter-view prediction (inter-view prediction) technology, thereby improving performance of coding and compression.

The inter-view prediction technology may include:
performing predictive coding on a current view by using an MV (Motion Vector, motion vector) of a base view as a reference, that is, an inter-view MV prediction inter-view MV prediction technology.

In the inter-view MV prediction technology, implementation steps thereof may include:

1. Acquire a DV (Disparity vector, disparity vector) predictor of a current prediction block based on neighboring block in a space domain and a time domain, where this process may be referred to as a DV derivation process (disparity vector derivation process), that is, a process of acquiring a DV predictor.

2. Acquire an MV/DV predictor of the current prediction block from the base view by using the acquired DV predictor, where the MV/DV predictor is acquired based on the base view, and may be referred to as an inter-view MV/DV predictor.

3. Perform multi-motion vector contention with another MV/DV predictor (intra-view) by using the acquired MV/DV predictor.

The process of acquiring a DV predictor is described by using an example in the following.

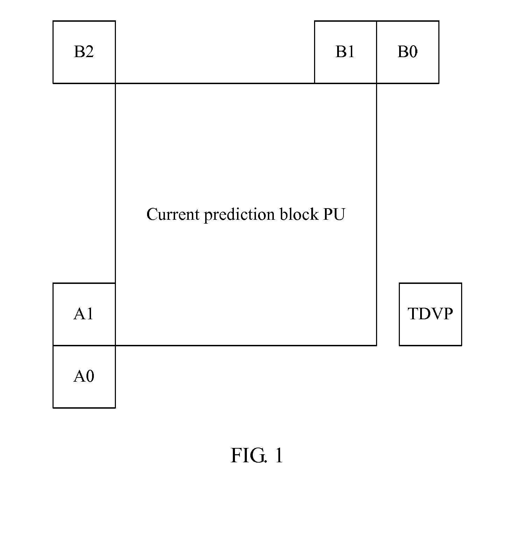

As shown in FIG. 1, a neighboring block of a current PU (Prediction Unit, prediction unit (which may be referred to as a prediction block hereinafter)) in the space domain may include: a neighboring block A0 (a lower left neighboring block corresponding to a lower left corner of the current PU), a neighboring block A1 (a left neighboring block corresponding to the lower left corner of the current PU), a neighboring block B0 (an upper right neighboring block corresponding to an upper right corner of the current PU), a neighboring block B1 (an upper neighboring block corresponding to the upper right corner of the current PU), and a neighboring block B2 (an upper left neighboring block corresponding to an upper left corner of the current PU); and a TDVP (Temporal Disparity vector predictor, temporal disparity vector predictor) is a corresponding disparity vector predictor of the current PU in the time domain.

Specific steps of acquiring a DV predictor may include the following:
It is detected sequentially whether DV information exists in each neighboring block, where if no DV information exists in a neighboring block, a next neighboring block continues to be checked; and if DV information exists in a neighboring block, a DV predictor of the current PU is acquired from the neighboring block.

A specific detection order may be but is not limited to: the prediction block A1 -> the prediction block B1 -> the prediction block B0 -> the prediction block A0 -> the prediction block B2 -> the TDVP. First, it is checked whether the DV information exists in the prediction block A1, where if the DV information exists, the DV predictor of the current PU is acquired from the prediction block A1; if DV information does not exist, the prediction block B1 is to be checked. Detection is performed sequentially according to the foregoing order until the DV predictor is acquired, and subsequent steps are not repeatedly described.

Further, a current CU (Coding Unit, coding unit) may include at least two PUs, and DV predictors of the at least two PUs are acquired in a serial manner, that is, a DV predictor of a next PU is to be acquired only after a DV predictor of a current PU is acquired.

In an implementation process of acquiring a disparity vector predictor of the foregoing prediction block, the prior art has at least the following disadvantage: if a current CU includes at least two PUs, dependency exists between the at least two PUs, and DV predictors of the at least two PUs can be acquired only in a serial manner, so that a parallel processing capability is weakened.

### SUMMARY

Embodiments of the present invention provide a method and an apparatus for acquiring a disparity vector predictor of a prediction block, and solve a problem that DV predictors of at least two PUs of a same coding unit can be acquired only in a serial manner, thereby improving a parallel processing capability.

In order to achieve the foregoing objective, the following technical solutions are adopted in the embodiments of the present invention:

According to one aspect, a method for acquiring a disparity vector predictor of a prediction block is provided, including:
acquiring a neighboring block of a current prediction block in a space domain;
determining, according to a partition manner of a current coding unit, a position of the current prediction block in the current coding unit, and a position of the neighboring block, whether the neighboring block is located in the current coding unit; and
acquiring, according to a preset order, a disparity vector predictor from a neighboring block not located in the current coding unit, and proceeding with the acquisition until a disparity vector predictor is acquired.

According to another aspect, an apparatus for acquiring a disparity vector predictor of a prediction block is provided, including:
a processor, configured to determine, according to a partition manner of a current coding unit, a position of the current prediction block in the current coding unit, and a position of the neighboring block, whether the neighboring block is located in the current coding unit; and
a receiver, configured to acquire the neighboring block of the current prediction block in a space domain, and acquire, according to a preset order, a disparity vector predictor from a neighboring block not located in the current coding unit, and proceed with the acquisition until a disparity vector predictor is acquired.

According to the method and apparatus for acquiring a disparity vector predictor of a prediction block provided in the embodiments of the present invention, after the foregoing solutions are adopted, a neighboring block of a current prediction block in a space domain is acquired; it is determined, according to a partition manner of a current coding unit, a position of the current prediction block in the current coding unit, and a position of the neighboring block, whether the neighboring block is located in the current coding unit; and a disparity vector predictor is acquired, according to a preset order, from a neighboring block not located in the current coding unit, and the acquisition proceeds until a disparity vector predictor is acquired. In this way, disparity vector predictors of at least two prediction blocks in a same coding unit may be acquired in parallel, which increases a speed of acquiring the disparity vector predictors of the at least two prediction blocks in the same coding unit, thereby improving a parallel processing capability.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a current PU and its spatial neighboring blocks and TDVP according to the background;
FIG. 2a to FIG. 2g are schematic structural diagrams of seven partition manners of a current coding unit CU according to an embodiment of the present invention;
FIG. 3 is a flowchart of a method for acquiring a disparity vector predictor of a prediction block according to an embodimen of the present invention;
FIG. 4a to FIG. 4c are schematic structural diagrams of a PU2, a PU3, a PU4, and their respective spatial neighboring blocks and TDVPs when a current coding unit CU is partitioned horizontally and vertically into a PU1, the PU2, the PU3, and the PU4; and
FIG. 5 is a schematic structural diagram of an apparatus for acquiring a disparity vector predictor of a prediction block according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the prior art, a current CU may include at least two PUs, and DV predictors of the at least two PUs are acquired in a serial manner, that is, a DV predictor of a next PU is to be acquired only after a DV predictor of a current PU is acquired.

Specifically, the prior art may include the following:

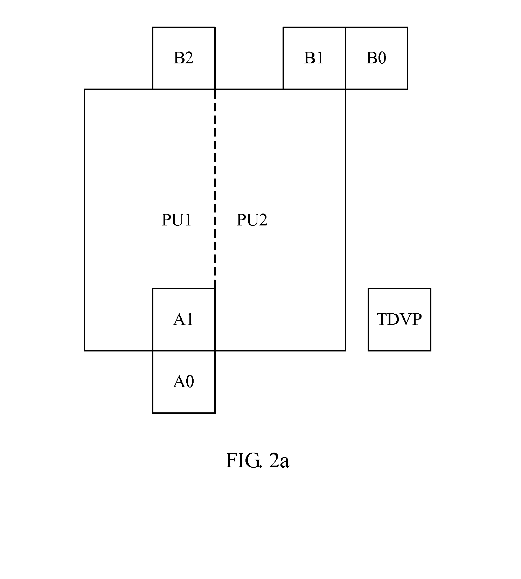

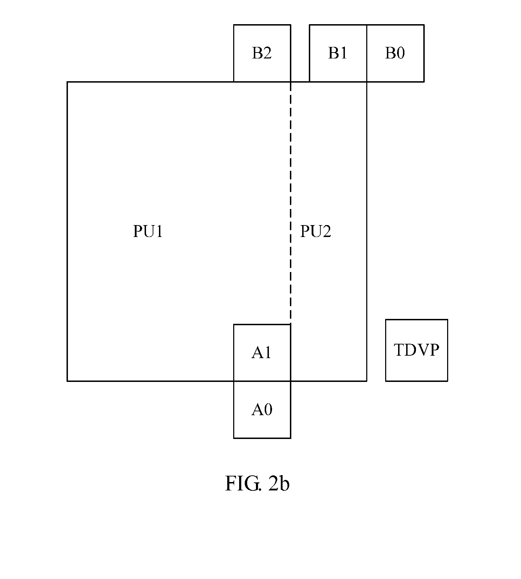

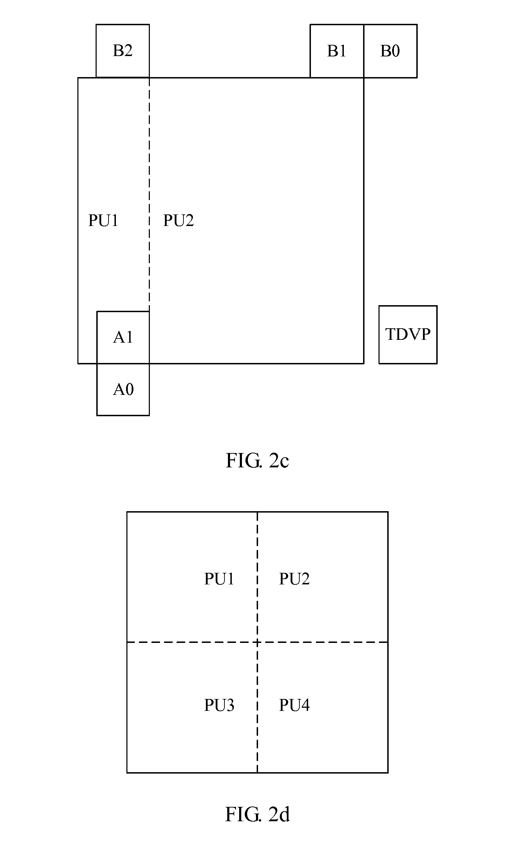

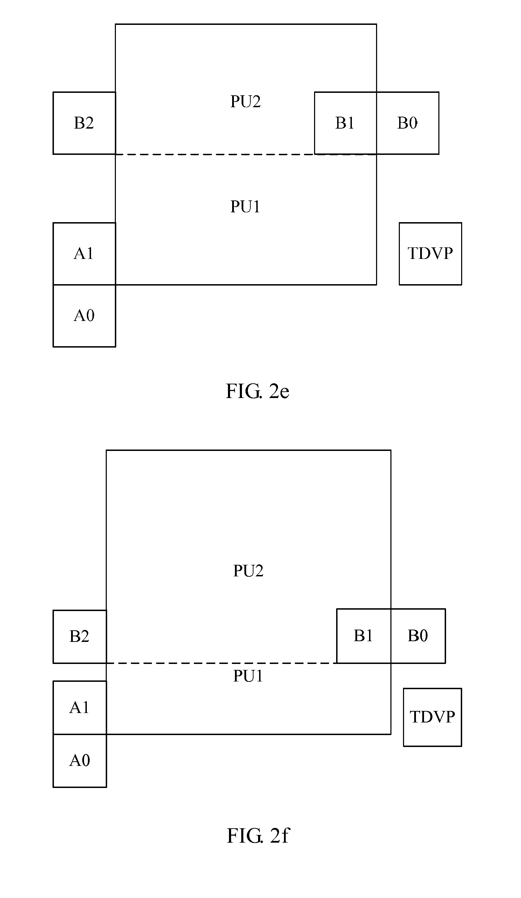

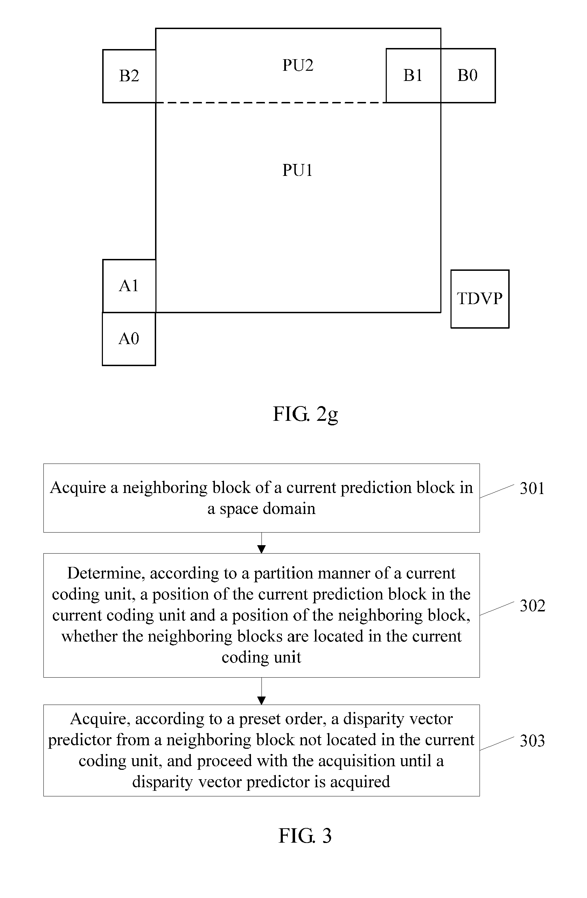

As shown in FIG. 2a to FIG. 2g, a CU (the solid box in the figure) may be further partitioned into multiple PUs, and in HEVC (High Efficiency Video Coding, High Efficiency Video Coding standard), there may be seven partition (partition) manners for a CU. For example, the partition manner in FIG. 2a to FIG. 2c is to partition a current CU into two PUs (a PU1 and a PU2) on the left and the right; for another example, the partition manner in FIG. 2d is to partition a current CU into four PUs (a PU1, a PU2, a PU3, and a PU4), and other types are not repeatedly described herein.

By using the partition shown in FIG. 2a as an example, a spatial neighboring block A1 of the PU2 is located in the PU1, and therefore, a DV predictor of the PU2 can be acquired only after coding of the PU1 is complete, and DV predictors of the PU1 and the PU2 are acquired in a serial manner. Specifically, first, the DV predictor of the PU1 is acquired according to the foregoing method, and then, the DV predictor of the PU2 is acquired according to the foregoing method.

As a result, a speed of acquiring DV predictors of at least two PUs is relatively low, and performance of compression and coding is weakened.

In order to solve the foregoing problem that a speed of acquiring DV predictors of at least two PUs is relatively low, and performance of compression and coding is weakened, this embodiment provides a method for acquiring a disparity vector predictor of a prediction block, and as shown in FIG. 3, the method may include:

301. Acquire a neighboring block of a current prediction block in a space domain.

302. Determine, according to a partition manner of a current coding unit, a position of the current prediction block in the current coding unit, and a position of the neighboring block, whether the neighboring block is located in the current coding unit.

303. Acquire, according to a preset order, a disparity vector predictor from a neighboring block not located in the current coding unit, and proceed with the acquisition until a disparity vector predictor is acquired.

After the foregoing solution is used, a neighboring block of a current prediction block in a space domain is acquired; it is determined, according to a partition manner of a current coding unit, a position of the current prediction block in the current coding unit, and a position of the neighboring block, whether the neighboring block is located in the current coding unit; and a disparity vector predictor is acquired, according to a preset order, from a neighboring block not located in the current coding unit, and the acquisition proceeds until a disparity vector predictor is acquired. In this way, disparity vector predictors of at least two prediction blocks in a same coding unit may be acquired in parallel, which increases a speed of acquiring the disparity vector predictors of the at least two prediction blocks in the same coding unit, thereby improving a parallel processing capability.

This embodiment provides another method for acquiring a disparity vector predictor of a prediction block, and the method is a further extension of the method shown in FIG. 3, and as shown in FIG. 3, the method may specifically include:

301. Acquire a neighboring block of a current prediction block in a space domain.

Further, as shown in FIG. 1, the acquired neighboring block of the current prediction block in the space domain may include: a neighboring block A0 located at a lower left side of the current prediction block, a neighboring block A1 located at a left side of the current prediction block, a neighboring block B0 located at an upper right side of the current prediction block, a neighboring block B1 located at an upper side of the current prediction block, and a neighboring block B2 located at an upper left side of the current prediction block.

302. Determine, according to a partition manner of a current coding unit, a position of the current prediction block in the current coding unit, and a position of the neighboring block, whether the neighboring block is located in the current coding unit.

Further, as shown in FIG. 2a to FIG. 2c, if the partition manner of the current coding unit is that: the current coding unit is partitioned vertically into a first prediction block and a second prediction block, and the current prediction block is the second prediction block, it is determined that the neighboring block A1 of the current prediction block is located in the current coding unit.

Further, as shown in FIG. 2e to FIG. 2g, if the partition manner of the current coding unit is that: the current coding unit is partitioned horizontally into a first prediction block and a second prediction block, and the current prediction block is the second prediction block, it is determined that the neighboring block B1 of the current prediction block is located in the current coding unit.

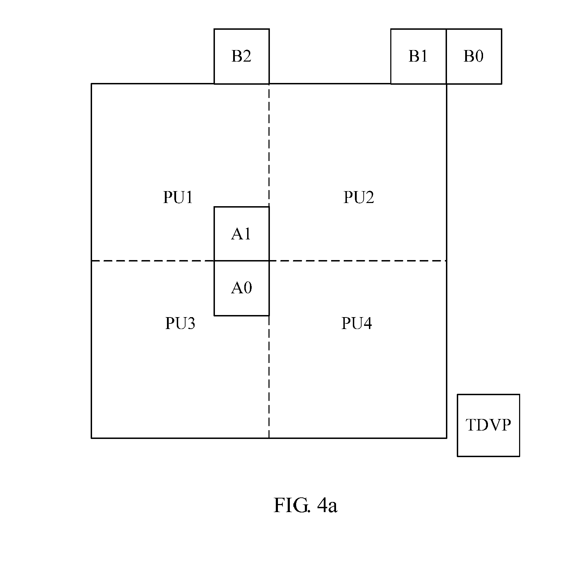

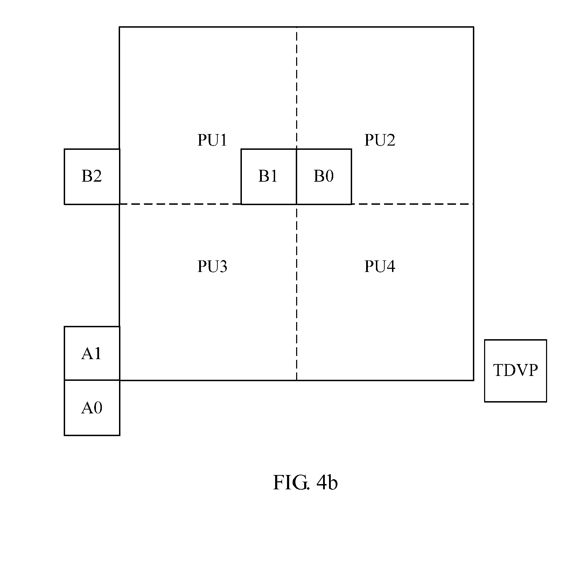

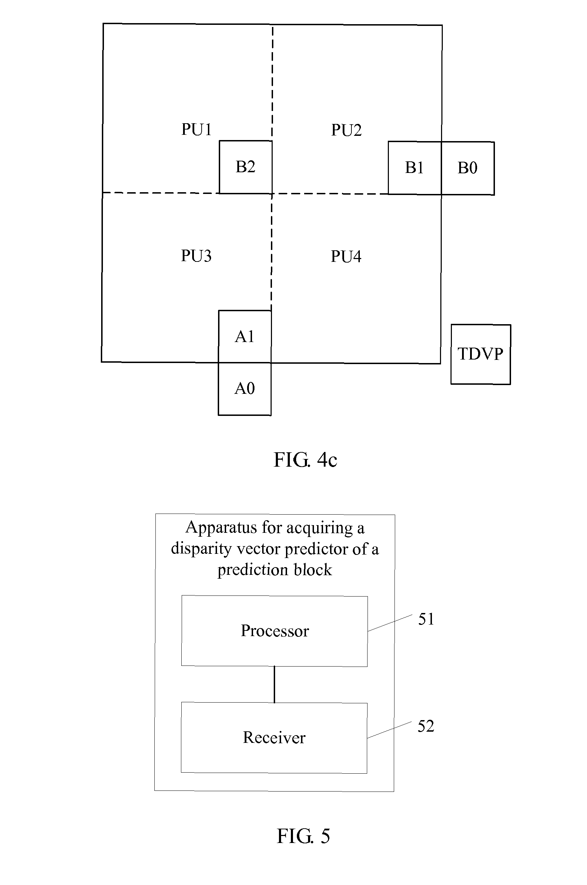

Further, as shown in FIG. 2d, if the partition manner of the current coding unit is that: the current coding unit is partitioned horizontally and vertically into a first prediction block PU1 located at an upper left side of the current coding unit, a second prediction block PU2 located at an upper right side of the current coding unit, a third prediction block PU3 located at a lower left side of the current coding unit, and a fourth prediction block PU4 located at a lower right side of the current coding unit:
as shown in FIG. 4a, if the current prediction block is the PU2, it is determined that the neighboring block A1 and the neighboring block A0 of the current prediction block are located in the current coding unit;
as shown in FIG. 4b, if the current prediction block is the PU3, it is determined that the neighboring block B1 and the neighboring block B0 of the current prediction block are located in the current coding unit; and
as shown in FIG. 4c, if the current prediction block is the PU4, it is determined that the neighboring block A1, the neighboring block B1, and the neighboring block B2 of the current prediction block are located in the current coding unit.

In this way, when the CU is partitioned horizontally and vertically into the PU1, the PU2, the PU3, and the PU4, when a disparity vector predictor is acquired, prediction blocks not located in the CU are to be considered only, so that the PU1, the PU2, the PU3, and the PU4 can acquire their respective disparity vector predictors in parallel.

If none of the neighboring blocks or a TDVP includes a disparity vector predictor, the disparity vector predictor of the PU1 is set to a preset disparity vector predictor.

This embodiment has no limitation on the preset order and the preset disparity vector predictor, which may be set according to actual requirements, for example, may be set in a manner in an HEVC inter-frame prediction mode. Details are not repeatedly described herein.

This embodiment has no limitation on a method for detecting a disparity vector predictor, which is a technology well known by a person skilled in the art. Details are not repeatedly described herein.

403. Acquire, according to a preset order, a disparity vector predictor from a neighboring block not located in the current coding unit, and proceed with the acquisition until a disparity vector predictor is acquired.

Further, the preset order may be: the neighboring block A1, the neighboring block B1, the neighboring block B0, the neighboring block A0, and the neighboring block B2.

Further, the acquiring, according to a preset order, a disparity vector predictor from a neighboring block not located in the current coding unit, and proceeding with the acquisition until a disparity vector predictor is acquired may include:
determining whether a current neighboring block includes a disparity vector predictor; if the current neighboring block includes a disparity vector predictor, acquiring the disparity vector predictor from the current neighboring block; and if the current neighboring block does not include a disparity vector predictor, acquiring, according to the preset order, a disparity vector predictor sequentially from another neighboring block, of which a disparity vector predictor has not been acquired, except the current neighboring block, and proceeding with the acquisition until a disparity vector predictor is acquired.

It can be seen from FIG. 2a to FIG. 2c that, in the neighboring blocks of the PU2, only the A1 is located in the PU1, and therefore, when the disparity vector predictor of the PU2 is acquired according to the neighboring blocks, the neighboring block A1 of the PU2 is not to be considered. In this way, the disparity vector predictors of the PU1 and the PU2 may be acquired in parallel. None of the neighboring blocks of the PU1 is located in the current coding unit CU, and therefore, when the disparity vector predictor of the PU1 is acquired according to the neighboring blocks, all the neighboring blocks of the PU1 may be considered. A specific method is the same as the prior art, and has been described in the background. Details are not described repeatedly herein.

Specifically, when the CU is partitioned vertically into the PU1 and the PU2, the acquiring the disparity vector predictor of the PU2 may include that: because the neighboring block A1 is not to be considered, detection may be performed according to the following preset order without being limited thereto: the neighboring block B1 -> the neighboring block B0 -> the neighboring block A0 -> the neighboring block B2 -> the TDVP. In this way, the disparity vector predictors of the neighboring block PU1 and the neighboring block PU2 may be acquired in a parallel manner.

It can be seen from FIG. 2e to FIG. 2g that, in the neighboring blocks of the PU2, only the B1 is located in the PU1, and therefore, when the disparity vector predictor of the PU2 is acquired according to the neighboring blocks, the neighboring block B1 of the PU2 is not to be considered. In this way, the disparity vector predictors of the PU1 and the PU2 may be acquired in parallel. None of the neighboring blocks of the PU1 is located in the current coding unit CU, and therefore, when the disparity vector predictor of the PU1 is acquired according to the neighboring blocks, all the neighboring blocks of the PU1 may be considered. A specific method is the same as the prior art, and has been described in the background. Details are not described repeatedly herein.

Specifically, when the CU is partitioned horizontally into the PU1 and the PU2, the acquiring the disparity vector predictor of the PU2 may include that: because the neighboring block B1 is not to be considered, detection may be performed according to the following preset order without being limited thereto: the neighboring block A1 -> the neighboring block B0 -> the neighboring block A0 -> the neighboring block B2 -> the TDVP. In this way, the disparity vector predictors of the neighboring block PU1 and the neighboring block PU2 may be acquired in a parallel manner.

It can be seen from FIG. 4a that, the neighboring block A1 and the neighboring block A0 of the PU2 are located in the current coding unit CU, and therefore, when the disparity vector predictor of the PU2 is acquired according to the neighboring blocks, the neighboring block A1 and the neighboring block A0 of the PU2 are not to be considered. In this way, the disparity vector predictors of the PU1 and the PU2 may be acquired in parallel. None of the neighboring blocks of the PU1 is located in the current coding unit CU, and therefore, when the disparity vector predictor of the PU1 is acquired according to the neighboring blocks, all the neighboring blocks of the PU1 may be considered. A specific method is the same as the prior art, and has been described in the background. Details are not described repeatedly herein.

Specifically, when the CU is partitioned horizontally and vertically into the PU1, the PU2, the PU3, and the PU4, as shown in FIG. 4a, if the current prediction block is the PU2, the acquiring the disparity vector predictor of the PU2 may include that: because the neighboring block A1 and the neighboring block A0 are not to be considered, a disparity vector predictor in each neighboring block and each TDVP may be acquired according to the following order without being limited thereto: the neighboring block B1 -> the neighboring block B0 -> the neighboring block B2 -> the TDVP.

As shown in FIG. 4b, if the current prediction block is the PU3, acquiring a disparity vector predictor of the PU3 may include that: because the neighboring block B1 and the neighboring block B0 of the PU3 are located in the current coding unit CU, the neighboring block B1 and the neighboring block B0 are not to be considered, and a disparity vector predictor in each neighboring block and each TDVP may be acquired according to the following order without being limited thereto: the neighboring block A1 -> the neighboring block A0 -> the neighboring block B2 -> the TDVP.

As shown in FIG. 4c, if the current prediction block is the PU4, acquiring a disparity vector predictor of the PU4 may include that: because the neighboring block B1, the neighboring block B0, and the neighboring block B2 of the PU4 are located in the current coding unit CU, the neighboring block B1, the neighboring block B0 and the neighboring block B2 are not to be considered, and a disparity vector predictor in each neighboring block and each TDVP may be acquired according to the following order without being limited thereto: the neighboring block B0 -> the neighboring block A0 -> the TDVP.

This embodiment has no limitation on the method for performing Inter-view MV prediction according to a disparity vector predictor and a method for acquiring a disparity vector from a neighboring block, which are technologies well known by a person skilled in the art. Details are not repeatedly described herein.

After the foregoing solution is used, a neighboring block of a current prediction block in a space domain is acquired; it is determined, according to a partition manner of a current coding unit, a position of the current prediction block in the current coding unit, and a position of the neighboring block, whether the neighboring block is located in the current coding unit; and a disparity vector predictor is acquired, according to a preset order, from a neighboring block not located in the current coding unit, and the acquisition proceeds until a disparity vector predictor is acquired. In this way, disparity vector predictors of at least two prediction blocks in a same coding unit may be acquired in parallel, which increases a speed of acquiring the disparity vector predictors of the at least two prediction blocks in the same coding unit, thereby improving a parallel processing capability.

In order to better illustrate beneficial effects that can be achieved in this embodiment, an emulation result based on a 3DV reference software platform is provided in the following, and the emulation result may further indicates that this embodiment will not cause a performance loss of coding. Emulation data is shown in the following table (where, the "average" row represents an average coding bitrate saving, and a negative number indicates that there is a gain):

| | **video 0** | **video 1** | **video 2** | **video only** | **synthesized only** | **coded & synthesized** | **enc time** | **dec time** | **ren time** |
|---|---|---|---|---|---|---|---|---|---|
| **Balloons** | 0.0% | 0.0% | -0.1% | 0.0% | 0.0% | 0.0% | 100.0% | 97.5% | 89.1% |
| **Kendo** | 0.0% | -0.2% | 0.0% | 0.0% | 0.0% | 0.0% | 100.2% | 92.8% | 103.9% |
| **Newspapercc** | 0.0% | -0.1% | 0.0% | 0.0% | -0.1% | 0.0% | 100.9% | 96.8% | 98.5% |
| **GhostTownFly** | 0.0% | 0.0% | 0.2% | 0.0% | 0.0% | 0.0% | 100.0% | 99.0% | 78.1% |
| **PoznanHall2** | 0.0% | 0.0% | -0.2% | 0.0% | 0.0% | 0.0% | 99.5% | 93.6% | 92.1% |
| **PoznanStreet** | 0.0% | -0.1% | 0.1% | 0.0% | 0.1% | 0.1% | 100.8% | 117.8% | 84.5% |
| **UndoDancer** | 0.0% | -0.1% | -0.2% | 0.0% | 0.0% | 0.0% | 99.6% | 97.0% | 72.1% |
| **1024x768** | 0.0% | -0.1% | 0.0% | 0.0% | 0.0% | 0.0% | 100.3% | 95.6% | 97.0% |
| **1920x1088** | 0.0% | -0.1% | 0.0% | 0.0% | 0.0% | 0.0% | 100.0% | 101.5% | 81.3% |
| **average** | **0.0%** | **-0.1%** | **0.0%** | **0.0%** | **0.0%** | **0.0%** | **100.1%** | **98.9%** | **87.7%** |

An embodiment provides an apparatus for acquiring a disparity vector predictor of a prediction block, and as shown in FIG. 5, the apparatus may include:
a processor 51, configured to determine, according to a partition manner of a current coding unit, a position of a current prediction block in a current coding unit, and a position of a neighboring block, whether the neighboring block is located in the current coding unit; and
a receiver 52, configured to acquire the neighboring block of the current prediction block in a space domain, and acquire, according to a preset order, a disparity vector predictor from a neighboring block not located in the current coding unit, and proceed with the acquisition until a disparity vector predictor is acquired.

Further, the preset order is : the neighboring block A1, the neighboring block B1, the neighboring block B0, the neighboring block A0 and the neighboring block B2.

Further, the neighboring block, acquired by the receiver 52, of the current prediction block in the space domain includes:
a neighboring block A0 located at a lower left side of the current prediction block, a neighboring block A1 located at a left side of the current prediction block, a neighboring block B0 located at an upper right side of the current prediction block, a neighboring block B1 located at an upper side of the current prediction block, and a neighboring block B2 located at an upper left side of the current prediction block.

Further, the processor 51 is further configured to: if the partition manner of the current coding unit is that: the current coding unit is partitioned vertically into a first prediction block and a second prediction block, and the current prediction block is the second prediction block, determine that the neighboring block A1 of the current prediction block is located in the current coding unit; and
if the partition manner of the current coding unit is that: the current coding unit is partitioned horizontally into a first prediction block and a second prediction block, and the current prediction block is the second prediction block, determine that the neighboring block B1 of the current prediction block is located in the current coding unit.

Further, the processor 51 is further configured to: if the partition manner of the current coding unit is that: the current coding unit is partitioned horizontally and vertically into a first prediction block located at an upper left side of the current coding unit, a second prediction block located at an upper right side of the current coding unit, a third prediction block located at a lower left side of the current coding unit, and a fourth prediction block located at a lower right side of the current coding unit:
if the current prediction block is the second prediction block, determine that the neighboring block A1 and the neighboring block A0 of the current prediction block are located in the current coding unit;
if the current prediction block is the third prediction block, determine that the neighboring block B1 and the neighboring block B0 of the current prediction block are located in the current coding unit; and
if the current prediction block is the fourth prediction block, determine that the neighboring block A1, the neighboring block B1 and the neighboring block B2 of the current prediction block are located in the current coding unit.

Further, the processor 51 is further configured to determine whether a current neighboring block includes a disparity vector predictor;
if the current neighboring block includes a disparity vector predictor, acquire the disparity vector predictor from the current neighboring block; and
if the current neighboring block does not include a disparity vector predictor, acquire, according to the preset order, a disparity vector predictor sequentially from another neighboring block, of which a disparity vector predictor has not been acquired, except the current neighboring block, and proceed with the acquisition until a disparity vector predictor is acquired.

After the foregoing solution is used, a receiver acquires a neighboring block of a current prediction block in a space domain; and a processor determines, according to a partition manner of a current coding unit, a position of the current prediction block in the current coding unit, and a position of the neighboring block, whether the neighboring block is located in the current coding unit, and acquires, according to a preset order, a disparity vector predictor from a neighboring block not located in the current coding unit, and proceeds with the acquisition until a disparity vector predictor is acquired. In this way, disparity vector predictors of at least two prediction blocks in a same coding unit may be acquired in parallel, which increases a speed of acquiring the disparity vector predictors of the at least two prediction blocks in the same coding unit, thereby improving a parallel processing capability.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for acquiring a disparity vector predictor of a prediction block, comprising:
acquiring a neighboring block of a current prediction block in a space domain;
determining, according to a partition manner of a current coding unit, a position of the current prediction block in the current coding unit, and a position of the neighboring block, whether the neighboring block is located in the current coding unit; and
acquiring, according to a preset order, a disparity vector predictor from a neighboring block not located in the current coding unit, and proceeding with the acquisition until a disparity vector predictor is acquired.

2. The method according to claim 1, wherein the neighboring block of the current prediction block in the space domain comprises:
a neighboring block A0 located at a lower left side of the current prediction block, a neighboring block A1 located at a left side of the current prediction block, a neighboring block B0 located at an upper right side of the current prediction block, a neighboring block B1 located at an upper side of the current prediction block, and a neighboring block B2 located at an upper left side of the current prediction block.

3. The method according to claim 2, wherein the determining, according to a partition manner of a current coding unit, a position of the current prediction block in the current coding unit, and a position of the neighboring block, whether the neighboring block is located in the current coding unit comprises:
if the partition manner of the current coding unit is that: the current coding unit is partitioned vertically into a first prediction block and a second prediction block, and the current prediction block is the second prediction block, determining that the neighboring block A1 of the current prediction block is located in the current coding unit; and
if the partition manner of the current coding unit is that: the current coding unit is partitioned horizontally into a first prediction block and a second prediction block, and the current prediction block is the second prediction block, determining that the neighboring block B1 of the current prediction block is located in the current coding unit.

4. The method according to claim 2, wherein the determining, according to a partition manner of a current coding unit, a position of the current prediction block in the current coding unit, and a position of the neighboring block, whether the neighboring block is located in the current coding unit comprises:
if the partition manner of the current coding unit is that: the current coding unit is partitioned horizontally and vertically into a first prediction block located at an upper left side of the current coding unit, a second prediction block located at an upper right side of the current coding unit, a third prediction block located at a lower left side of the current coding unit, and a fourth prediction block located at a lower right side of the current coding unit:
if the current prediction block is the second prediction block, determining that the neighboring block A1 and the neighboring block A0 of the current prediction block are located in the current coding unit;
if the current prediction block is the third prediction block, determining that the neighboring block B1 and the neighboring block B0 of the current prediction block are located in the current coding unit; and
if the current prediction block is the fourth prediction block, determining that the neighboring block A1, the neighboring block B1, and the neighboring block B2 of the current prediction block are located in the current coding unit.

5. The method according to any one of claims 1 to 4, wherein the acquiring, according to a preset order, a disparity vector predictor from a neighboring block not located in the current coding unit, and proceeding with the acquisition until a disparity vector predictor is acquired comprises:
determining whether a current neighboring block comprises a disparity vector predictor;
if the current neighboring block comprises a disparity vector predictor, acquiring the disparity vector predictor from the current neighboring block; and
if the current neighboring block does not comprise a disparity vector predictor, acquiring, according to the preset order, a disparity vector predictor sequentially from another neighboring block, of which a disparity vector predictor has not been acquired, except the current neighboring block, and proceeding with the acquisition until a disparity vector predictor is acquired.

6. The method according to any one of claims 1 to 4, wherein, the preset order is : the neighboring block A1, the neighboring block B1, the neighboring block B0, the neighboring block A0, and the neighboring block B2.

7. An apparatus for acquiring a disparity vector predictor of a prediction block, comprising:
a processor, configured to determine, according to a partition manner of a current coding unit, a position of a current prediction block in the current coding unit, and a position of a neighboring block, whether the neighboring block is located in the current coding unit; and
a receiver, configured to acquire the neighboring block of the current prediction block in a space domain, and acquire, according to a preset order, a disparity vector predictor from a neighboring block not located in the current coding unit, and proceed with the acquisition until a disparity vector predictor is acquired.

8. The apparatus according to claim 7, wherein the neighboring block, acquired by the receiver, of the current prediction block in the space domain comprises:
a neighboring block A0 located at a lower left side of the current prediction block, a neighboring block A1 located at a left side of the current prediction block, a neighboring block B0 located at an upper right side of the current prediction block, a neighboring block B1 located at an upper side of the current prediction block, and a neighboring block B2 located at an upper left side of the current prediction block.

9. The apparatus according to claim 8, wherein the processor is further configured to: if the partition manner of the current coding unit is that: the current coding unit is partitioned vertically into a first prediction block and a second prediction block, and the current prediction block is the second prediction block, determine that the neighboring block A1 of the current prediction block is located in the current coding unit; and
if the partition manner of the current coding unit is that: the current coding unit is partitioned horizontally into a first prediction block and a second prediction block, and the current prediction block is the second prediction block, determine that the neighboring block B1 of the current prediction block is located in the current coding unit.

10. The apparatus according to claim 8, wherein the processor is further configured to: if the partition manner of the current coding unit is that: the current coding unit is partitioned horizontally and vertically into a first prediction block located at an upper left side of the current coding unit, a second prediction block located at an upper right side of the current coding unit, a third prediction block located at a lower left side of the current coding unit, and a fourth prediction block located at a lower right side of the current coding unit:
if the current prediction block is the second prediction block, determine that the neighboring block A1 and the neighboring block A0 of the current prediction block are located in the current coding unit;
if the current prediction block is the third prediction block, determine that the neighboring block B1 and the neighboring block B0 of the current prediction block are located in the current coding unit; and
if the current prediction block is the fourth prediction block, determine that the neighboring block A1, the neighboring block B1, and the neighboring block B2 of the current prediction block are located in the current coding unit.

11. The apparatus according to any one of claims 7 to 10, wherein the processor is further configured to determine whether a current neighboring block comprises a disparity vector predictor;
if the current neighboring block comprises a disparity vector predictor, acquire the disparity vector predictor from the current neighboring block; and
if the current neighboring block does not comprise a disparity vector predictor, acquire, according to the preset order, a disparity vector predictor sequentially from another neighboring block, of which a disparity vector predictor has not been acquired, except the current neighboring block, and proceed with the acquisition until a disparity vector predictor is acquired.

12. The apparatus according to any one of claims 7 to 10, wherein the preset order is :
the neighboring block A1, the neighboring block B1, the neighboring block B0, the neighboring block A0 and the neighboring block B2.
